Europäisches Patentamt

European Patent Office

Office européen des brevets

(19)

(11) **EP 0 668 571 B1**

(12) **EUROPEAN PATENT SPECIFICATION**

(45) Date of publication and mention
of the grant of the patent:
**16.01.2002 Bulletin 2002/03**

(51) Int Cl.⁷: **G06T 15/10**

(21) Application number: **95102287.0**

(22) Date of filing: **17.02.1995**

(54) **Picture synthesizing apparatus**

Bildsynthetisierungsgerät

Appareil synthétiseur d'image

(84) Designated Contracting States:
**DE FR GB**

(30) Priority: **18.02.1994 JP 2103894**

(43) Date of publication of application:
**23.08.1995 Bulletin 1995/34**

(73) Proprietor: **MATSUSHITA ELECTRIC INDUSTRIAL CO., LTD.**
**Kadoma-shi, Osaka 571-8501 (JP)**

(72) Inventors:
 • **Nakagawa, Masamichi**
  **Hirakata-shi, Osaka 573 (JP)**
 • **Sato, Junichi**
  **Nara-shi, Nara 631 (JP)**
 • **Kado, Yoshiyasu**
  **Matsudo-shi, Chiba 271 (JP)**

(74) Representative:
**Grünecker, Kinkeldey, Stockmair &**
**Schwanhäusser Anwaltssozietät**
**Maximilianstrasse 58**
**80538 München (DE)**

(56) References cited:
**EP-A- 0 100 097          GB-A- 2 256 567**

## Description

The present invention relates to a picture synthesising apparatus and method.

From EP-A-0 100 097, a computer controlled imaging system is known making use of a gaming area database, which is purely mathematical, and of an object library database which stores real-world images of objects in a scene. The system has the ability to compose and construct a sequential stream of scenes for a display from a library of images with sufficient processing speed to permit real-time or near real-time analysis of the images by a human operator or a hardware/software equivalent thereof. This system can generate images from selected viewpoints by combining many real-world images. The real-world images are stored as components. This system therefore needs to consider positions and directions of many components in three-dimensional space which needs three-dimensional geometry procedures. In the present invention the whole background can be represented by two dimension data such as one image. This image is generated by viewing from a certain viewpoint, a three-dimensional space can be composed without three-dimensional geometric procedures, by using only two dimensional procedures for one background.

From GB-A-2 256 567, a modeling system for producing a two dimensional image of a three-dimensional scene is known, including a three-dimensional computer graphics modeler for producing a view from a selectable viewpoint, and in a selectable direction of a three-dimensional computer graphics model of an object for forming a foreground image. It further comprises a source of backdrop video data, a digital video effects apparatus for manipulating the backdrop video data to produce a background image, and a compositor for keying for the foreground image into the background image to form the two dimensional image. The modeling system is able to produce in real-time photorealistic representations of computer models of objects, such as buildings and the like, in a real-world environment. It is possible to include moving foreground objects in the model for virtual reality applications. In contrast thereto, the present invention composes an image with high speed by considering depth information irrespective of any complicated shapes the background may have, similar to image composing methods in two dimensions.

To present a picture with a presence so that the viewer feels as if seeing the actual scene, it is important to present the image corresponding to the changes of viewing point so that the surrounding scene may be looked around when the viewer turns the head.

When a picture is synthesized from a three-dimensional model of an object or a reflection model of a surface hitherto used in computer graphics or the like, it is possible to synthesize the picture from an arbitrary viewpoint.

It is, however, often impossible to synthesize a picture of high quality in real time, depending on the instruction of move of viewing point of the viewer, due to limitation of the performance of the apparatus and the like.

Another problem is that the generated picture by computer graphics is an artificial and unnatural picture quality as compared with the natural picture taken by a camera or the like.

To solve these problems, it has been attempted to take in and utilize a CG picture preliminarily prepared by taking a processing time or a natural picture taken by a camera, in a synthesized picture.

Conventionally, such known arts included image synthesizing apparatuses for cutting out a picture depending on the direction of viewing point and angle of field of view indicated by the viewer, from a wide-angle plane picture taken by a wide-angle lens, or a columnar projected picture taken by rotating 360 degrees in the horizontal direction around one viewing point known as a panoramic picture.

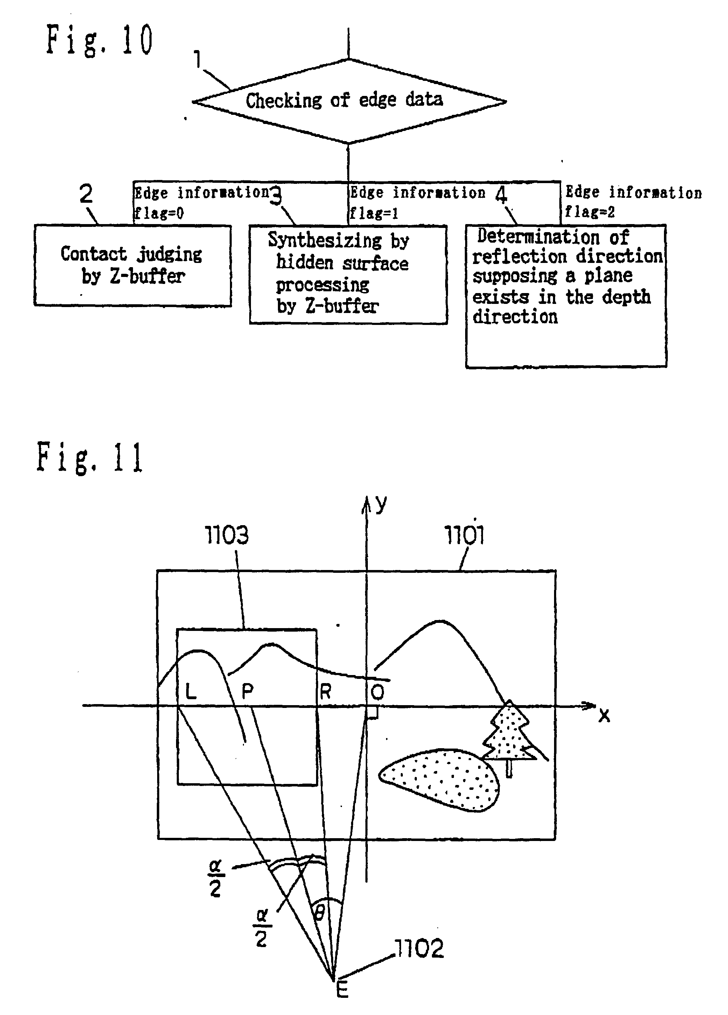

These arts are described below. Fig. 11 is a diagram showing a method of cutting out a synthesized picture from a wide-angle plane picture. In the diagram, reference numeral 1101 denotes a plane picture taken by a wide-angle lens or the like, and the X-axis is defined in the horizontal direction with O at the center, and the Y-axis, in the vertical direction. Suppose to cut out a picture when rotated by θ degrees in the horizontal direction from the viewing point 1102. In this case, the center of a cut-out region 1103 is supposed to be P, and the right end and left end of the X-axis to be R and L, respectively. The X-coordinates of points R and L, Rx and Lx, are determined in the following formulas, supposing the angle of field of view in the horizontal direction to be α degrees, and the distance from viewing point 1102 to the center O of the plane picture, that is, the focal length in taking picture to be F.

$$[1] \qquad Rx = F \cdot \tan(\theta - \alpha/2)$$

$$Lx = F \cdot \tan(\theta + \alpha/2)$$

where the angle of rotation is positive in the left-thread direction about the Y-axis.

Similarly, the Y-coordinates of the upper end and lower end of the cut-out coordinates in the vertical direction, Uy, By, are calculated in the following formula, supposing the vertical field angle to be β.

$$[2] \qquad Ux = F \cdot \tan(-\beta/2)$$

$$Bx = F \cdot \tan(\beta/2)$$

Hence, by cutting out the region designated by Rx, Lx, Uy, By, depending on the angle of rotation θ, a picture corresponding to the horizontal rotation of the viewing point can be synthesized.

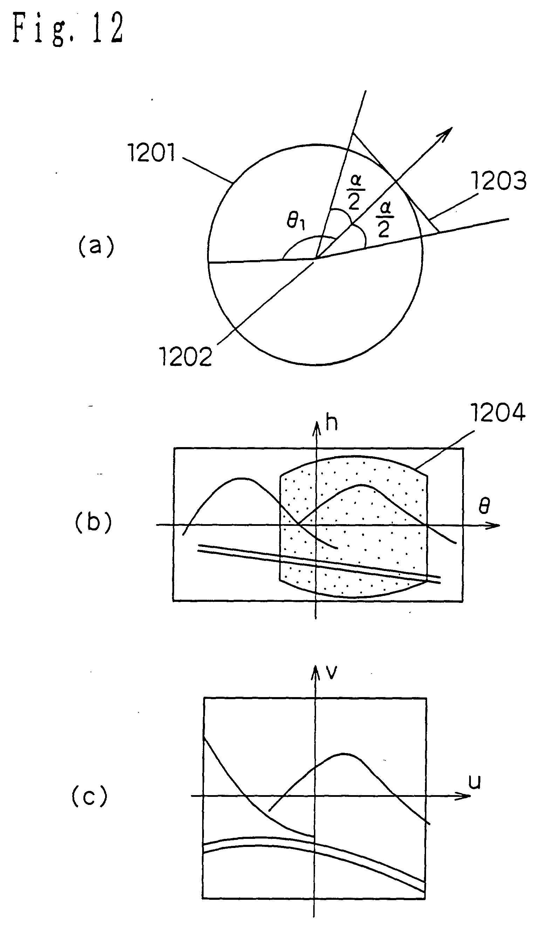

Next is described a method of obtaining a synthesized picture in a certain viewing line direction from a panoramic picture. Fig. 12a is a schematic diagram showing the relation between a panoramic picture seen from above and a synthesized picture. Reference numeral 1201 is a panoramic picture projecting an image of 360 degrees in the horizontal direction on a circular cylinder. Various methods are known to create a panoramic picture, including a method of taking while rotating the photo detector of a vertical slit by 360 degrees, and a montage method of splicing plane pictures taken by rotating the camera or the like around the receiving plane by specific angles by deforming geometrically. The panoramic picture 1201 is a two-dimensional picture with angle of rotation of e about the viewing point and height of h in the vertical direction. Fig. 12b is a plane development of this panoramic picture.

In Fig. 12a, the picture of observing the $\theta 0$ direction from the viewing point 1202 is a picture 1203 projecting the panoramic picture on a tangential plane of a circular cylinder.

Supposing the horizontal and vertical axes of a synthesized picture to be U, V and the focal length to be F, the point ($\theta 1$, h1) of panoramic picture corresponding to point (u1, v1) in the synthesized picture is determined in the following formula.

$$[3] \qquad \theta 1 = \arctan(u1/F) + \theta 0$$

$$h1 = v1 \cdot \cos(\theta)$$

Supposing the angle of field of view to be a, a desired synthesized picture is obtained by calculating about u1 corresponding from $\theta 0 - \alpha/2$ to $\theta 0 + \alpha/2$.

Fig. 12c shows an example of a picture. Reference numeral 1204 in Fig. 12b is a region in a panoramic picture corresponding to the cut-out picture of Fig. 12c.

In such picture synthesizing apparatus, however, since all pictures are present on the same plane and circular cylinder, processing using the information of undulations on the picture is impossible.

That is, in the picture synthesizing apparatus, when a background picture is handled, a sufficiently remote far-shot picture can be synthesized, but a picture mutually interfering with the foreground cannot be synthesized.

For example, as the foreground other than the background, when an object by computer graphics or the like is synthesized simultaneously, there is no undulation information in the background picture, it is impossible to process so as to synthesize to hide part of the foreground object by part of the background, or to vary the mode of collision depending on the shape of the background when the foreground object moves to collide against the background.

When handling the background of a short distance to the viewing point such as a room or a corner of street, mutual interference of background and foreground is effective to enhance the presence of the synthesizing effect.

It is hence a primary object of the invention to eliminate the problems and present a picture synthesizing apparatus capable of synthesizing, for example, reproduction in a reflection direction when a fore object is hidden or an object collides against the background, by part of the background picture, due to undulations of a background picture.

To solve the problems, the invention comprises means for storing a background picture, means for storing the information of depth, slope and possibility of edge pass-through as undulation information of background picture, and control means for controlling the display or moving direction of foreground object by means for calculating the interference between the foreground object and undulation information of background picture.

According to the invention, since the undulation information of background picture is used, it is possible to synthesize not only plane or circular cylinder shapes, but also pictures having effects of hidden surface processing of background and foreground as the processing requiring complicated shape of background, or reflection depending on the inclination of undulations of the background object by collision of a foreground object against the background picture.

As for rotation of viewing point, on the other hand, it is enough to vary only the cut-out position of picture, and therefore the background picture can be synthesized in a simple processing as compared with computer graphics of synthesizing the background picture from complicated three-dimensional shape.

## BRIEF DESCRIPTION OF THE DRAWINGS

Fig. 1 is a schematic structural diagram of a first embodiment of the invention;

Fig. 2 is a diagram showing the relation between background picture and background depth;

Fig. 3 is a diagram showing the shape expression of a foreground object and the system of coordinates;

Fig. 4 is a processing flow chart of the first embodiment of the invention;

Fig. 5 is a schematic structural diagram of a second embodiment of the invention;

Fig. 6 is a processing flow chart of the second embodiment of the invention;

Fig. 7 is a schematic structural diagram of a third embodiment of the invention;

Fig. 8 is a schematic structural diagram of a fourth embodiment of the invention;

Fig. 9 is a diagram showing depth edge information;
Fig. 10 is a processing flow chart of the fourth embodiment of the invention;
Fig. 11 is a diagram showing a prior art; and
Fig. 12 is a diagram showing other prior art.

## DESCRIPTION OF THE PREFERRED EMBODIMENTS

Embodiment 1

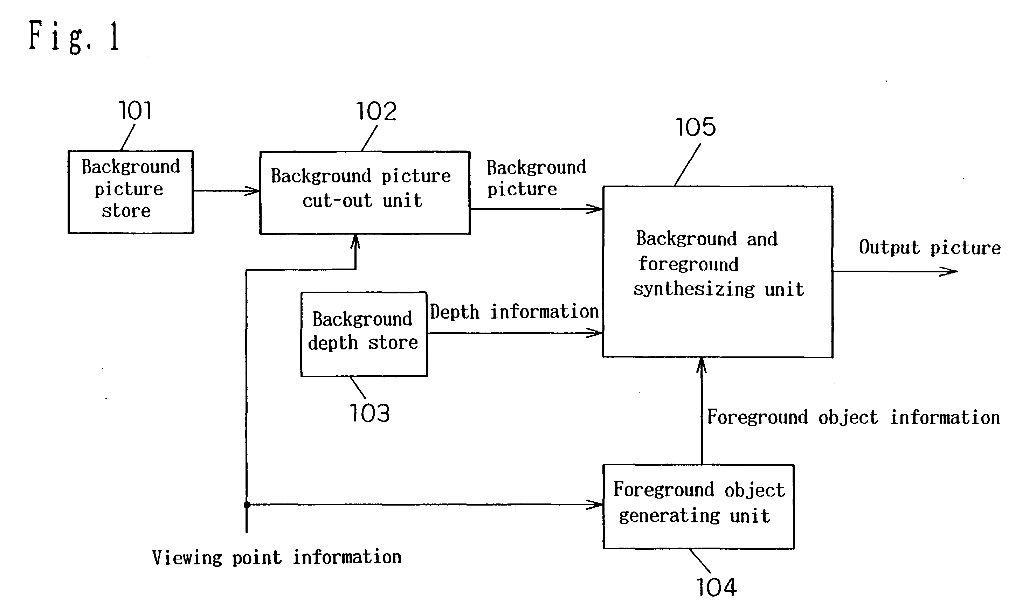

Fig. 1 is a schematic structural diagram of a picture synthesizing apparatus in a first embodiment of the invention. In Fig. 1, reference numeral 101 is a background picture store for storing a background picture in a wide range, 102 is a background picture cut-out unit for cutting out a background picture entering a viewing field by the viewing point information of viewing point direction, position and angle of field of view from the background picture in a wide range, 103 is a background depth store for storing the depth information of the background in a wide range corresponding to the background picture stored in 101, 104 is a foreground object generating unit for generating the foreground object information as the information for synthesizing the object in the picture such as the shape and position of the foreground object placed in three-dimensional space together with viewing point information, and 105 is a picture synthesizing unit for synthesizing the picture of the foreground object on the background picture in consideration of the hiding relation of the background picture and foreground object picture from 102 by comparing the background depth information from 103 and position of foreground object from 104.

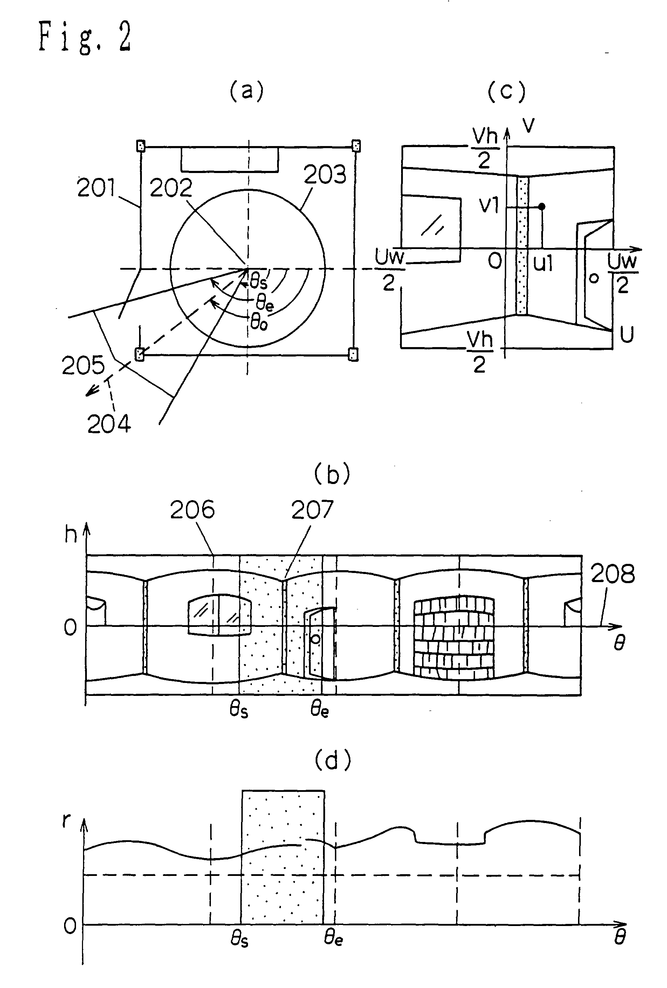

The operation of the first embodiment is described below. Fig. 2 expresses a rectangular background of a room or the like by a columnar panoramic picture, showing a case of synthesizing with a foreground object. Fig. 2 is a schematic diagram showing the relation between the panoramic picture and background from above the column. Fig.2a is a plan view of a room, and its projection on a column 203 about the viewing point 202 is a panoramic picture 206 in Fig. 2b. It is a two-dimensional array defined by the angle of rotation e about the viewing point and the height h in the vertical direction.

This panoramic picture can be generated by a method of rotating the photo detector of vertical slit by 360 degrees or by splicing plane pictures. It is also possible to generate artificially by a technique of computer graphics, for example, a ray tracing method which takes a long processing time. Such picture is stored in the background picture store 101 in Fig. 1.

In the background picture cut-out unit, supposing now the viewing point to be at the position of 202 in Fig. 2a, the viewing line direction 204 to be θ0, and the viewing field to be somewhere between the angle value θs indicated by 205 and θe, the shaded area 207 on the panoramic picture 206 in Fig. 2b is the region corresponding to the background picture for cutting out the region 207.

For high speed cut-out, approximately, the distortion of the projection images of column and plane is ignored, and the output of the background picture cut-out unit is obtained by primary linear interpolation from the region indicated by 207.

As shown in Fig. 2c, supposing the horizontal axis and vertical axis of the cut-out background picture to be U and V, respectively, and the width and height of the background picture to be Uw and Vh, the values of the point $(u1, v1)$ in the picture are determined as the values of the point $(\theta1, h1)$ of the corresponding panoramic picture in the following formulas.

$$[4] \qquad \theta1 = u1/Uw \cdot (\theta e - \theta s) + \theta s$$

$$h1 = v1/Vw \cdot Hmax$$

where Hmax is the maximum value of h of the panoramic picture.

Since the panoramic picture is discretized, the point $(\theta1, h1)$ calculated in the formulas above may not be fitted accurately to the discretized point. In such a case, the value is calculated by linear approximation of four neighboring points.

More accurately, projections of column and plane are transformed. In this case, the point $(\theta1, h1)$ of the panoramic picture corresponding to the point $(u1, v1)$ in the synthesized picture is determined in the following formulas, supposing the angle of field of view in the lateral direction to be $\alpha$, and the focal length to be F.

$$[5] \qquad \alpha = (\theta e - \theta s)$$

$$F = 2 \cdot Uw/\tan(\alpha /2)$$

$$\theta1 = \arctan(u1/F) + \theta0$$

$$h1 = v1 \cdot \cos(\theta1)$$

The depth information of the background is explained below. From a point at height h in the vertical direction from viewing point 202 in Fig. 2a, a straight line is extended in the direction of angle of rotation θ, and the distance until it hits against the background object 201 is supposed to be $r(\theta, h)$, and it is the background depth at $(\theta, h)$. The background depth information is a two-dimensional array of θ, h same as in the panoramic picture, and its element is the depth value r.

It is Fig. 2d which shows the change of the depth value r on the straight line where h in Fig. 2b is 0. The background depth information is generated by a three-dimensional measuring apparatus such as range finder, or generated by man by entering while referring to the background image with CAD tool or the like.

In the background depth cut-out unit, the depth value from θs to θe is cut out by the viewing point information. The depth value corresponding to point (u1, v1) in the picture is the value r (θ1, h1) corresponding to θ1, h1 calculated in formula 4 or formula 5.

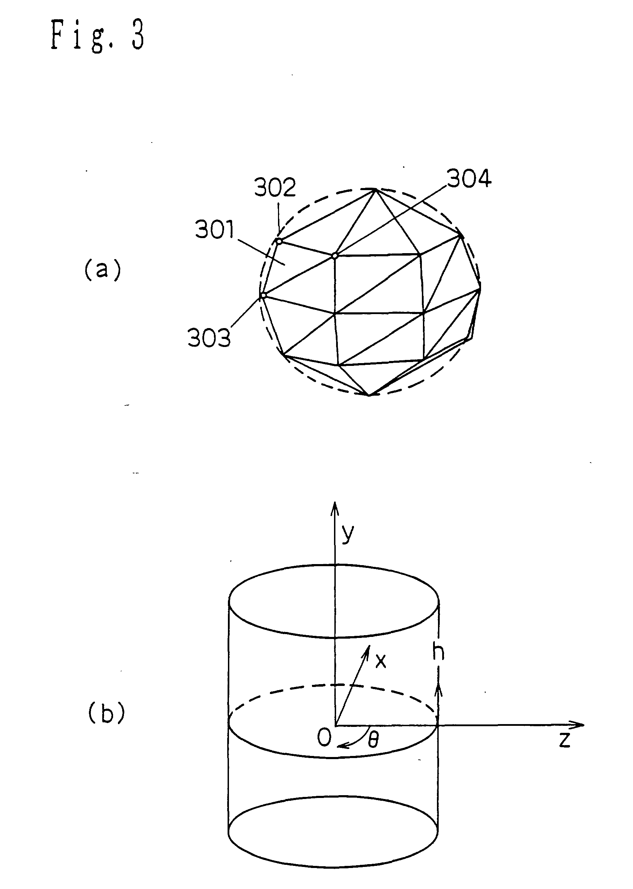

In the foreground object generating unit, the surface shape of the object to be generated is expressed by a polygon which is an approximation of a plane. Fig. 3a shows a sphere expressed by a triangular polygon. One polygon 301 is expressed by three elements, that is, a list of peaks for composing the polygon 301, three-dimensional coordinates of peaks 302, 303, 304 in the list, and polygon attribute information necessary for rendering such as polygon color and reflection coefficient. The three-dimensional position of the peak 304 is expressed by the system of rectangular coordinates of X, Y, Z. As shown in Fig. 3b, the origin is set at the same viewing point as the system of columnar coordinates of the panoramic picture, and the Z-axis is the axis with zero degree of horizontal rotational angle θ of panoramic picture. The Y-axis is an upward direction of the rotary axis of the cylinder, and X-axis is the system of right-hand coordinates orthogonal to the Z-axis and Y-axis. The three-dimensional positions of peaks, list of peaks for composing the polygon, and polygon attribute information about all polygons for composing the object is the foreground object information that is the output of the foreground object generating unit.

Incidentally, the foreground object is not limited only to the one having a three-dimensional magnitude. For example, in the case of using a two-dimensional picture of an object, when the picture is handled as attribute information pasted on the plane polygon, it may be handled similarly when the foreground is a two-dimensional picture.

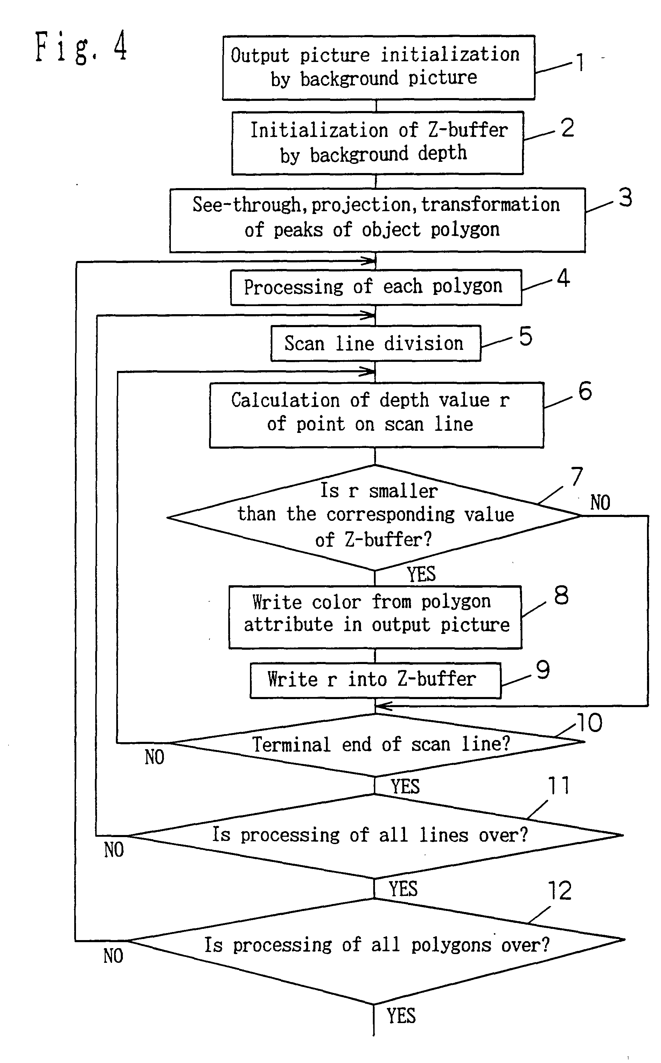

Next, in the background and foreground synthesizing unit, a method of synthesizing the foreground and background from the foreground object information, background information, and background depth information is described by referring to a drawing. Fig. 4 is a flow chart of background and foreground synthesization. For hidden surface processing, the Z-buffer method widely employed in computer graphics is used.

(1) First, the background picture of the output of the background picture cut-out unit is copied on the output picture. As a result, the value is defined in the entire output picture.

(2) In the Z-buffer of which each element is a two-dimensional array of the depth information in the same size as the output picture, the background depth information from the background depth information cut-out unit is copied. The larger the depth value, the remoter it is from the viewing point.

(3) The coordinates of each peak of the polygon for composing the object are seen through, projected and transformed. The coordinates of the peak are (x0, y0, z0). First, the direction θ0 of viewing point and Z-axis shown in Fig. 2a are rotated about the Y-axis in the following formula to coincide with the direction of the viewing line. Supposing the coordinates after transforming into the system of coordinates of the viewing point to be (xp, yp, zp), it follows that:

$$[6] \qquad xp = x0 \cdot \cos\theta - z0 \cdot \sin\theta$$

$$yp = y0$$

$$zp = x0 \cdot \sin\theta + z0 \cdot \cos\theta$$

Next, in the system of UV coordinates as shown in Fig. 2c, the projection is transformed onto the output picture of the width Uw, height Vh. The point (u0, v0) on the picture on which the peak is projected is determined in the following formula by using F in formula 5. Herein, the aspect ratio of the projection and transformation is supposed to be 1.

$$[7] \qquad u0 = F \cdot xp/zp$$

$$v0 = F \cdot yp/zp$$

(4) Polygons of the foreground object from the foreground object generating unit are sequentially processed.

(5) The polygon is divided into scan lines, and each pixel on each scan line is processed. The polygon is divided into scan lines parallel to the U-axis on the output image, and the coordinates in the system of coordinates of viewing field at both end points of each scan line are calculated, and the coordinates (xpl, ypl, zpl) in the system of coordinates of viewing field of internal point (u1,v1) on the scan line are calculated by internal division of both end points.

(6) The depth value r of the columnar system of coordinates of the point (u1, v1) on the scan line is calculated in the following formula.

$$[8] \qquad r = sqrt(xp \cdot xp + zp \cdot zp)$$

where sqrt ( ) denotes the square root.

(7) The depth value corresponding to (u1, v1) of the Z-buffer is compared with r. When r is smaller, the point of the foreground object is before the background, and steps

(8) and (9) are processed. When larger, it remains as background picture. Hence, the foreground object hidden in the background is not displayed, and the partially concealed foreground object can be also expressed.

(8) The color of the plane determined from the polygon attribute information is written into the point (u1, v1) of the output image.

(9) The depth value r calculated in (7) is written into the point (u1, v1) of the Z-buffer.

(10) All pixels on the scan line are processed according to steps (6) to (9).

(11) All scan lines of polygon are processed according to steps (5) to (10).

(12) All polygons of an object are processed according to steps (4) to (11).

Embodiment 2

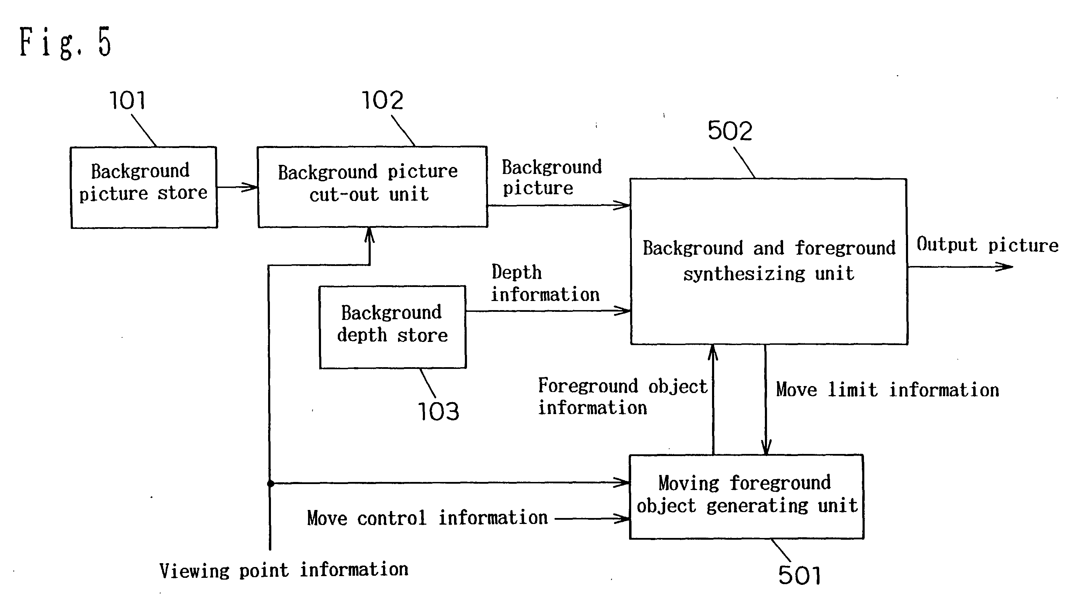

A second embodiment of the invention is described below. Fig. 5 is a schematic structural diagram of the second embodiment. Reference numeral 501 is a moving foreground object generating unit for generating a moving object which moves in a three-dimensional space according to moving control information. The moving control information is either interactively instructed by man by means of mouse or the like, or internally calculated to generate a trajectory. As a former example, an object simulating the hand of a man is moved in a room, and as a latter example, a ball bounces in a room. In this case, once the initial motion direction is determined, the subsequent trajectory until hitting against the wall can be calculated dynamically. In this moving foreground object generating unit, together with the three-dimensional shape of the object explained in the first embodiment, the information of its moving direction and speed are also stored.

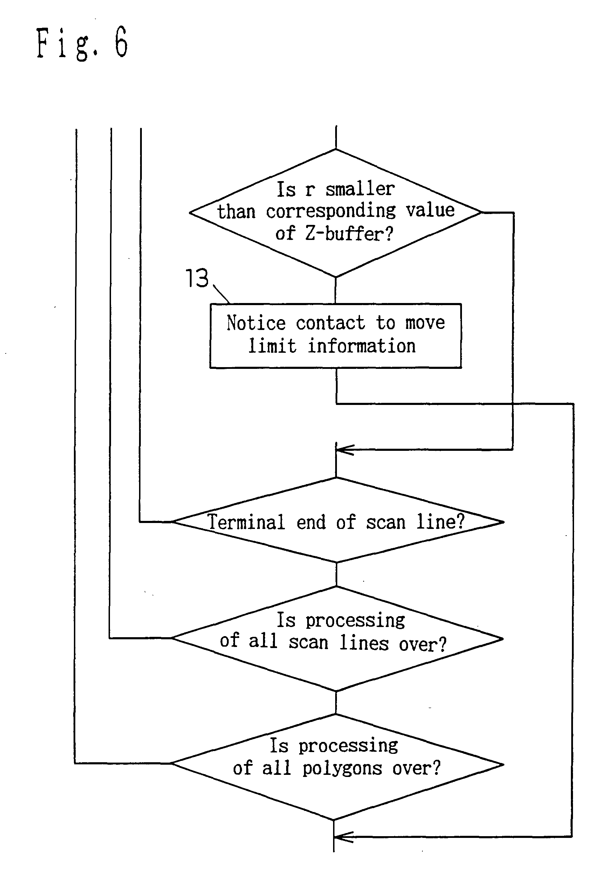

In a background and foreground synthesizing unit 502, steps (8) and (9) of the Z-buffer processing explained in Fig. 4 in the first embodiment is changed to conduct judging process as shown in Fig. 6.

(13) Contacting of the background and moving foreground object is noticed to the moving foreground object generating unit as moving limit information.

Afterwards, suspending the synthesizing process, picture synthesizing is started again with new foreground object information from the moving foreground object.

When this moving limit information is entered, in the moving foreground object generating unit, the presently held moving direction is inverted, and the information of the changed moving foreground object is generated at the position moved by the portion of the speed.

Hence, when attempted to synthesize a picture of moving an object behind the background, the motion of reflection such as bouncing against the wall is reproduced, without being buried in the wall or the like.

At step (13), without stopping the synthesization instantly, by adding the number of the contacting polygon and the point coordinates to the moving limit information and then transferring to the next polygon processing, it is known how many polygons have made contact in the moving foreground object generating unit. By deforming the contacting polygons according to this information, shapes not only reflecting merely but crushed by contact can be also synthesized.

Moreover, by providing the foreground object information with changeover information of reflection process or penetration process in every polygon, reflection processing and hidden surface processing can be changed over, so that a bouncing object and a wall penetrating object can be synthesized simultaneously.

By producing the output of synthesized picture after completion of all processes, flickering of output image due to retry of synthesization or the like can be prevented.

Embodiment 3

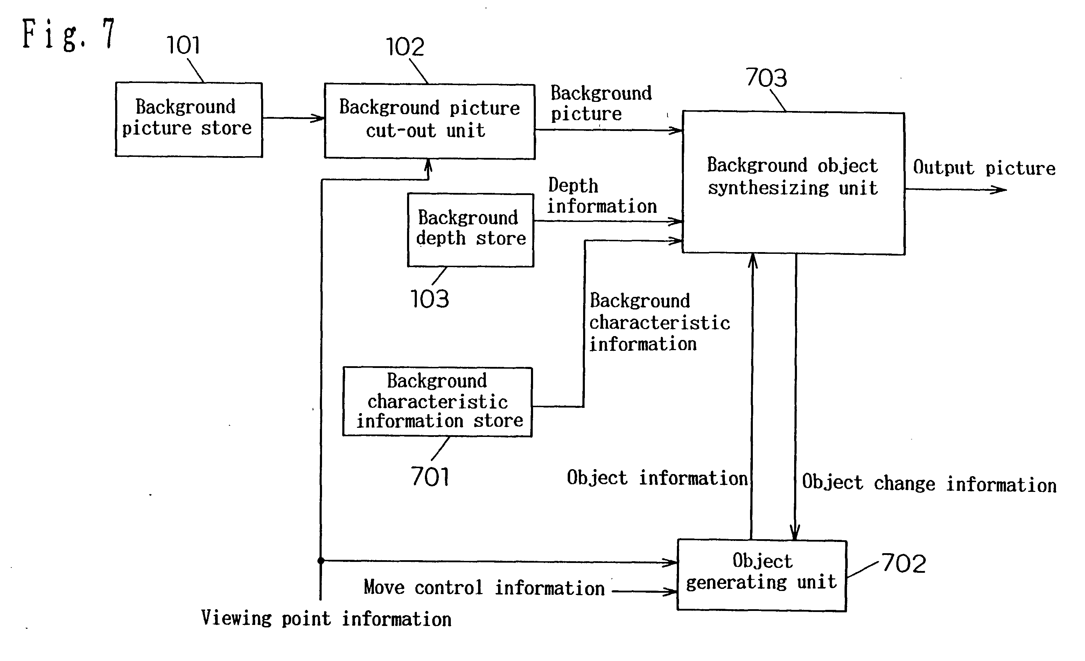

A third embodiment of the invention is described below. Fig. 7 is a schematic structural diagram of the third embodiment of the invention. Reference numeral 701 is a background characteristic store, which stores background characteristics, such as the inclination of the background surface, attracting and bouncing repulsive coefficients of the background and object, impact factor to determine the impact strength of collision due to hardness of the background material, and temperature of background material, as the information for determining the characteristics in the case of mutual action of the background and object by collision or the like, corresponding to the background picture of the background picture store 101.

The background characteristic information is a two-dimensional array of rotational angle θ around the horizontal axis and height h in the vertical direction same as in the background picture, and each element of the array consists of a corresponding background characteristic.

For example, considering the inclination and repulsive coefficient as the background characteristics, the inclination of the background surface can be expressed by normal vectors (Nx, Ny, Nz). The system of coordinates of the normal vectors is the system of XYZ rectangular coordinates same as the system of coordinates of peaks of an object.

Supposing the repulsive coefficient of background to be ν1, it refers to the ratio of speed of an object before and after collision, and when it is 1, the speed is not lowered, and when smaller than 1, it decelerates. For example, when ν1 is 0, the surface has a nature of attraction, and the object sticks to the background. Usually the value is somewhere between 0 and 1, but it may exceed 1 in the case of repulsion by magnetic force or the like.

By collision, moreover, in an object generating unit 702, three-dimensional moving direction vectors (Mx, My, Mz) of object are added to the shape and position of the object, and the object information such as repulsive coefficient ν 2 of object same as the background characteristic is entered, if necessary, into a background object synthesizing unit 703.

In the background object synthesizing unit, same as in the second embodiment, contact between background and object is investigated.

In Fig. 6 (13) in the case of occurrence of contact, from the direction vector of the moving object and the normal vector of the background, reflection direction vectors (Lx, Ly, Lz) are determined as follows so as to be symmetrical to the normal of the background inclination and moving direction.

$$[9] \quad Lx = Mx - Nx$$

$$Ly = My - Ny$$

$$Lz = Mz - Nz$$

Moreover, from the moving speed of the object before reflection, repulsive coefficient ν1 of background and repulsive coefficient ν2 of object, the moving speed of the object after reflection is calculated. For example, supposing the speed before reflection to be V1 and the speed after reflection to be V2, it can be calculated as

$$[10] \quad V2 = ν 1 \times ν 2 \times V1$$

The direction and moving speed after reflection of the object are added to the object change information. In the object generating unit, the averages of direction and speed of this reflection are determined in the entire object, and utilized as the direction and speed of the next moving quantity. Or, in the object change information, the point of the maximum difference between the background depth value and the object point depth value r is set as the first contact point, and the moving direction and speed of that point are set as the new moving direction and speed, thereby generating an object.

By adding the impact coefficient of the background at the point of collision against the object to the object change information, in the object generating unit, when the impact coefficient exceeds the impact deformation threshold stored as the characteristic of object, by generating an object by adding deformation processing such as reduction of the object shape in the moving direction depending on the impact coefficient, it is possible to express a picture when a soft object collides against a hard background.

Or, by adding the background temperature to the object change information, in the object generating unit, it is possible to synthesize a picture of change of the object due to background temperature by generating an exploded, evaporated or fused object in the case over a specific temperature, depending on the characteristic about the temperature of object.

A method of calculating the inclination of background from the background depth information in the above case is described. Direction vectors are calculated in a three-dimensional space from a point desired to determine the inclination to a neighboring point. The three-dimensional position of a point on the background is expressed by the columnar system of three coordinates, that is, θ and h of panoramic picture and depth value r. It is transformed into a system of rectangular coordinates explained in Fig. 3b, and the vectors are calculated by subtracting the central coordinate values from the coordinates of the neighboring point, thereby normalizing so that the magnitude may be 1.

When concerning with four vicinities of upper, lower, right and left positions, four vectors are obtained. An outer product of two adjacent vectors of these vectors is calculated. In the case of four vicinities, four outer product vectors are obtained. Averaging these four outer product vectors and normalizing to magnitude 1, the background inclination of the point to be determined is obtained.

Embodiment 4

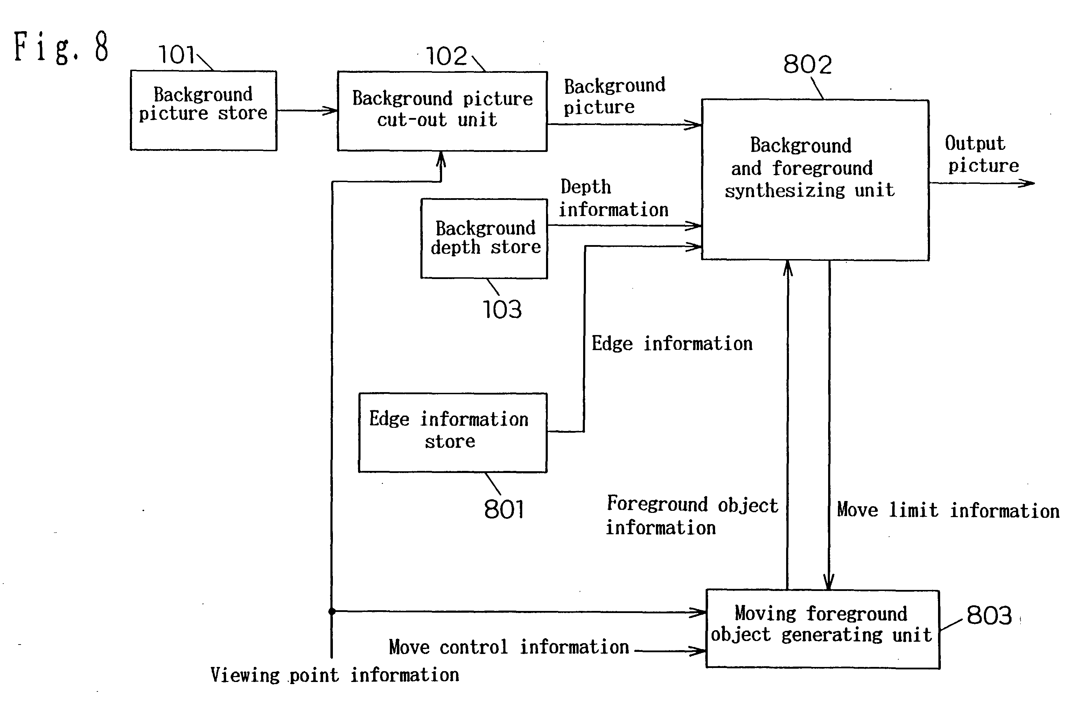

A fourth embodiment of the invention is described below. Fig. 8 shows a schematic structural diagram of the fourth embodiment. Reference numeral 801 in Fig. 8 is an edge information store, which stores the edge information telling whether there is a discontinuous point or not in the depth of the background, and whether or not possible to pass through the discontinuous edge if any.

The edge information is a two-dimensional array of θ and h, and each element has a value of 0 if there is no edge, 1 if possible to pass through an edge, and 2 if impossible.

In the case of the edge, moreover, it has maximum and minimum values of the edge depth. In the absence of edge, the values are indefinite.

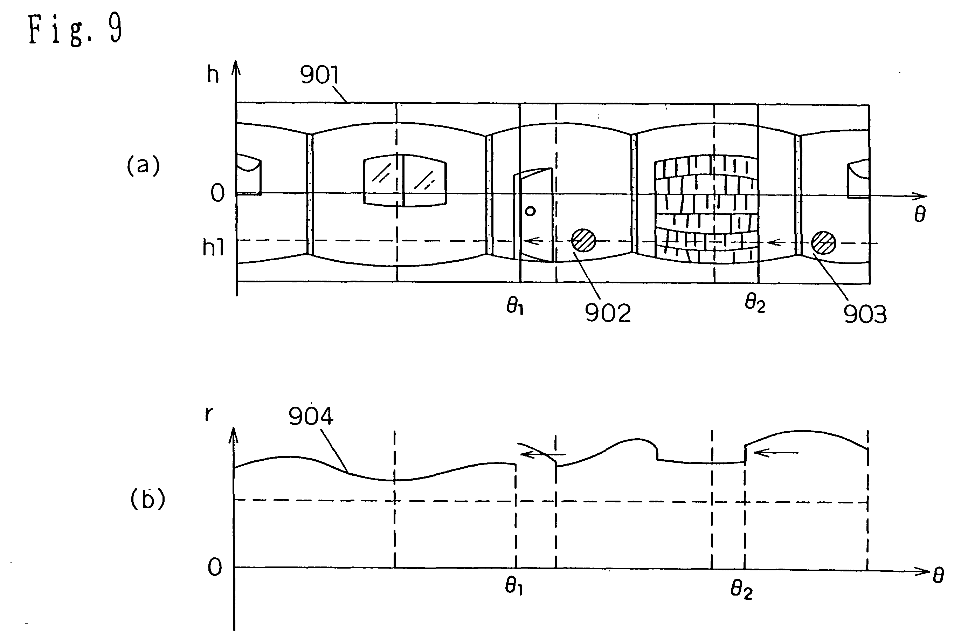

The edge information is specifically described by referring to the diagrams. In Fig. 9a, reference numeral 901 is a background picture, 902 denotes an object moving to position (θ1, h1) and its moving direction, and 903 indicates an object at position (θ2, h1) and its moving direction. Suppose the shape of the depth r at height h1 to be 904 as shown in Fig. 9b. At θ1, there is a discontinuous edge in the depth due to door, and at θ2, there is a discontinuous edge in the bookshelf. It is possible to pass through at θ1, and impossible at θ2.

Accordingly, in the edge information, (θ1, h1) is the value of 1, and (θ2, h1) is 2, and maximum value and minimum value of each edge are stored.

In the moving foreground object generating unit, the shape, position and moving direction of the moving object are entered in a background and foreground synthesizing unit 803 on the basis of the moving control information. In the background and foreground synthesizing unit, contact of the background and foreground moving object is judged. Fig. 10 is a flow chart of this contact judgment.

(1) Referring to the flag at the corresponding point of edge information, process is branched.

(2) If the flag is 0, it is not edge point, and contact is judged same as in the second embodiment, and in the case of contact, the contact is noticed to the moving foreground object generating unit by the moving control information.

(3) If the flag is 1, it is the edge that can be passed through. Same as in the first embodiment, hidden surface processing is done by the Z-buffer.

(4) If the flag is 2, there is an edge that cannot be passed through in the depth direction. In this case, when there is an object between the maximum and minimum of the edge, the moving control information is noticed to the moving foreground object generating unit so as to the reflect the moving direction to the opposite side of the depth direction.

Depending on such processing, in the moving foreground object generating unit, the moving direction is corrected when necessary, and the moving object is generated.

In the foregoing embodiments, panoramic pictures are used, but the background picture of the invention is not limited to panoramic picture alone. For example, it can be easily applied to plane pictures explained in the prior art by replacing the system of columnar coordinates with a system of rectangular coordinates. Or, instead of a column, a background picture projected on a sphere may be also used. In such a case, the system of columnar coordinates is replaced with a system of polar coordinates.

Effects of the Invention

Thus, according to the invention, by hidden surface processing and processing reflection by plane, which are three-dimensional mutual actions of the foreground object and background, together with synthesization of background by rotation of viewing point, it is possible to synthesize the picture with an enhanced presence as a three-dimensional space.

**Claims**

**1.** A picture synthesising apparatus comprising:

background image storing means (101) for storing a background image which is obtained by looking a certain background from a predetermined view point (202) within a 3 dimensional space,

background depth storing means (103) for storing depth information's about each respective pixel of said background image, while said depth information is a distance between the view point and a constitution element of said certain background, the each respective element being corresponding to said each respective pixel,

foreground object information input means (104) for entering object information of at least position and configuration of a foreground object placed in said 3 dimensional space, thereby to obtain a foreground image by looking the foreground object from the view point (202),

foreground object depth calculation means for calculating foreground object depth information which are distances between said view point and each respective constitution element of said foreground object within said 3 dimensional space, by using said object information,

synthesising means (105) for synthesising a total image by selecting either a pixel (A) of the background image or a pixel (B) of the foreground object image on the basis of the background depth information and the foreground depth information, while the two pixels (A), (B) to be selected are such pixels that a constitution element of the background corresponding to the pixel (A) of the background image and a constitution element of the foreground object corresponding to the pixel (B) of the foreground image are on a same direction from said view point, and

the synthesising means selects a pixel which has a smaller value of said depth information.

**2.** A picture synthesising apparatus as set forth in claim 1 further comprising:

judging means (502) for determining if contact has occurred between the foreground element and the background element,

changing means for changing the foreground information when the judging means determines that contact has occurred, and

wherein said judging means for determining if contact has occurred is based on a property of the background element and a property of the foreground element, and

wherein said information about the foreground object includes velocity of the foreground object, and the property of the foreground element includes a repulsive coefficient, a temperature and an elasticity of the foreground object, and

the property of the background element includes a repulsive coefficient, a temperature and a hardness of the background element.

3. A picture synthesising apparatus according to claim 2 wherein said changing means includes configuration changing characteristics of explosion and fusion, based on the temperature of the foreground object and the temperature of the background element.

4. A picture synthesising apparatus according to claim 2 wherein said changing means includes configuration changing characteristics of deformation and scattering, based on the hardness of the background element and the elasticity of the foreground element.

5. A picture synthesising apparatus according to claim 2 wherein

(a) inclination of each background element is represented by normal vectors (Nx, Ny, Nz), the repulsive coefficient of each background element is represented by v1, moving speed of the foreground object is represented by V1, moving direction of the foreground object is represented by (Lx, Ly, Lz), new moving speed of the foreground object after the contact is represented by V2, and new moving direction of the foreground object after the contact is represented by (Mx, My, Mz).

(b) the new moving speed V2, and the new moving direction (Mx, My, Mz) is calculated on the basis of the inclination (Nx, Ny, Nz), repulsive coefficient v1, moving speed V1, and moving direction (Lx, Ly, Lz), and

(c) a new position of the foreground object is obtained on the basis of the new speed V2, and new moving direction (Mx, My, Mz).

6. A picture synthesising apparatus as set forth in claim 2 wherein

said judging mans judges a contact, while the foreground element and the background element are on a same direction line from said view point,

and said synthesising means synthesises a total image, while two pixels (A), (B) to be selected are such pixels that a constitution element of the background corresponding to the pixel (A) of the background image and a constitution element of the changed foreground object corresponding to the pixel (B) of the changed foreground image are on a same direction line from said view point.

7. A picture synthesising apparatus according to claim 6, wherein

the rule is such that the change is determined on the property of the background and the property of the foreground object.

8. A picture synthesising apparatus according to claim 1, wherein

the background depth information includes an information about a discontinuous point of the background.

9. A picture synthesising apparatus according to claim 1, comprising further

wide background image storing means for storing a wide background image, and

background image cut out means for cutting out a narrow background image which is within a certain view filed which is determined by an inputted view point information, from the wide background image,

wherein

said background image storing means store the cut out narrow background image.

10. A method for synthesising a picture comprising the steps of:

(a) storing a background image obtained by viewing a background from a predetermined view point within a 3 dimensional space,

(b) storing depth information about each respective pixel of the background image, wherein the depth information includes distance between the view point and an element of the background, each respective element corresponding to each respective pixel,

(c) entering object information of at least position and configuration of a foreground object placed in the 3 dimensional space, thereby to obtain a foreground image by viewing the foreground object from the view point,

(d) calculating foreground object depth including distances between the view point and each respective element of the foreground object within the 3 dimensional space, by using the object information,

(e) synthesising a total image by selecting either a pixel (A) of the background image or a pixel (B) of the foreground object image based on the background depth information and the foreground depth information, when the two pixels (A), (B) to be selected are in a direction line from the view point, and
wherein the step of synthesising includes selecting a pixel which has a smaller depth value.

**11.** A method for synthesising a picture as set forth in claim 10 further comprising the steps of:

(e) judging contact of an element (C) in the foreground object with an element (D) in the background, on the basis of the background depth and the foreground depth when element (C) and element (D) are in a direction line from the view point, and

(f) changing the configuration or the position of the foreground object based on a predetermined rule after judging that contact has occurred,

**12.** The method of claim 11, wherein
the predetermined rule is based on a property of the background and a property of the foreground object.

**13.** The method of claim 12, wherein

the foreground object information includes velocity of the foreground object,

the property of the background includes one of repulsive coefficient, temperature and hardness, and

the property of the foreground object includes one of repulsive coefficient, elasticity and temperature.

**14.** The method of claim 13, wherein
the property of temperature of the foreground object is a configuration changing characteristic such as explosion or fusion and is based on temperature of the background.

**15.** The method of claim 14, wherein
the elasticity property of the foreground object is a configuration changing characteristic, such as deformation or disassembly corresponding to hardness of the background.

**16.** The method of claim 14, wherein

when inclination of each element of the background is represented with normal vectors (Nx, Ny, Nz), repulsive coefficient of the background is represented with ν1, moving speed of the foreground object is represented with V1, moving direction of the foreground object is represented with (Lx, Ly, Lz), new moving speed of the foreground object after the contact is represented with V2, and new moving direction of the foreground object after the contact is represented with (Mx, My, Mz),

the new moving speed V2, and new moving direction (Mx, My, Mz) is calculated on the basis of the inclination (Nx, Ny, Nz), repulsive coefficient ν1, moving speed V1, and moving direction (Lx, Ly, Lz), and

a new position of the foreground object is obtained on the basis of the new moving speed V2, and new moving direction (Mx, My, Mz).

**17.** The method of claim 10, wherein
the background depth information includes information about a discontinuous point of the background.

**18.** The method of claim 10, including the following steps:

(f) storing a wide background image,

(g) cutting out a narrow background image from the wide background image, and

(h) storing the cut out narrow background image as the background image in step (a).

**Patentansprüche**

**1.** Bildsynthetisierungsvorrichtung, die aufweist:

eine Hintergrundbild-Speichereinrichtung (101) zum Speichern eines Hintergrundbilds, das durch Betrachten eines bestimmten Hintergrunds von einem vorbestimmten Betrachtungspunkt (202) innerhalb eines dreidimensionalen Raums aus erhalten ist,
eine Hintergrund-Tiefenspeichereinrichtung (103) zum Speichern von Tiefeninformationen über jedes jeweilige Pixel des Hintergrundbilds, während die Tiefeninformationen einen Abstand zwischen dem Betrachtungspunkt und einem Bestandteilelement des bestimmten Hintergrunds sind, wobei das jeweilige Element jedem jeweiligen Pixel entspricht,

eine Vordergrundobjekt-Informations-Eingabeeinrichtung (104) zum Eingeben von Objektinformationen von mindestens einer Position und einer Konfiguration eines Vordergrundobjekts, plaziert in dem dreidimensionalen Raum, um dadurch ein Vordergrundbild durch Sehen des Vordergrundobjekts von dem Betrachtungspunkt (202) aus zu erhalten,

eine Vordergrundobjekt-Tiefenberechnungseinrichtung zum Berechnen von Vordergrundobjekttiefeninformationen, die Abstände zwischen dem Betrachtungspunkt und jedem jeweiligen Bestandteilelement des Vordergrundobjekts innerhalb des dreidimensionalen Raums sind, unter Verwendung der Objektinformationen,

eine Synthetisierungseinrichtung (105) zum Synthetisieren eines gesamten Bilds durch Auswählen entweder eines Pixels (A) des Hintergrundbilds oder eines Pixels (B) des Vordergrundobjektbilds auf der Basis der Hintergrundtiefeninformationen und der Vordergrundtiefeninformationen, während die zwei Pixel (A), (B), die ausgewählt werden sollen, solche Pixel sind, dass ein Bestandteilelement des Hintergrunds entsprechend zu dem Pixel (A) des Hintergrundbilds und ein Bestandteilelement des Vordergrundobjekts entsprechend dem Pixel (B) des Vordergrundbilds auf derselben Richtung von dem Betrachtungspunkt aus liegen, und

wobei eine Synthetisierungseinrichtung ein Pixel auswählt, das einen kleineren Wert der Tiefeninformationen besitzt.

2.  Bildsynthetisierungsvorrichtung nach Anspruch 1, die weiterhin aufweist;

eine Beurteilungseinrichtung (502) zum Bestimmen, ob ein Kontakt zwischen dem Vordergrundelement und dem Hintergrundelement aufgetreten ist,

eine Änderungseinrichtung zum Ändern der Vordergrundinformationen, wenn die Beurteilungseinrichtung bestimmt, dass ein Kontakt aufgetreten ist, und

wobei die Beurteilungseinrichtung zum Bestimmen, ob ein Kontakt aufgetreten ist, auf einer Eigenschaft des Hintergrundelements und einer Eigenschaft des Vordergrundelements basiert, und

wobei die Informationen über das Vordergrundobjekt eine Geschwindigkeit des Vordergrundobjekts umfassen, und die Eigenschaft des Vordergrundelements einen Rückstoßkoeffizienten, eine Temperatur und eine Elastizität des Vordergrundobjekts umfasst, und

die Eigenschaft des Hintergrundelements einen Rückstoßkoeffizienten, eine Temperatur und eine Härte des Hintergrundelements umfasst.

3.  Bildsynthetisierungsvorrichtung nach Anspruch 2, wobei die Änderungseinrichtung eine die Konfiguration ändernde Charakteristik einer Explosion und einer Fusion, und zwar basierend auf der Temperatur des Vordergrundobjekts und der Temperatur des Hintergrundelements, umfasst.

4.  Bildsynthetisierungsvorrichtung nach Anspruch 2, wobei die Änderungseinrichtung eine die Konfiguration ändernde Charakteristik einer Deformation und einer Streuung, basierend auf der Härte des Hintergrundelements und der Elastizität des Vordergrundelements, umfasst.

5.  Bildsynthetisierungsvorrichtung nach Anspruch 2, wobei

(a) eine Neigung jedes Hintergrundelements durch Normalen-Vektoren (Nx, Ny, Nz) dargestellt wird, wobei der Rückstoßkoeffizient jedes Hintergrundelements durch v1 dargestellt ist, die Bewegungsgeschwindigkeit des Vordergrundobjekts durch V1 dargestellt ist, die Bewegungsrichtung des Vordergrundobjekts durch (Lx, Ly, Lz) dargestellt ist, eine neue Bewegungsgeschwindigkeit des Vordergrundobjekts nach dem Kontakt durch V2 dargestellt ist, und eine neue Bewegungsrichtung des Vordergrundobjekts nach dem Kontakt durch (Mx, My, Mz) dargestellt ist,

(b) die neue Bewegungsgeschwindigkeit V2, und die neue Bewegungsrichtung (Mx, My, Mz) auf der Basis der Neigung (Nx, Ny, Nz), des Rückstoßkoeffizienten v1, der Bewegungsgeschwindigkeit V1 und Bewegungsrichtung (Lx, Ly, Lz) berechnet wird, und

(c) eine neue Position des Vordergrundobjekts auf der Basis der neuen Geschwindigkeit V2 und der neuen Bewegungsrichtung (Mx, My, Mz), erhalten wird.

6.  Bildsynthetisierungsvorrichtung nach Anspruch 2, wobei

die Beurteilungseinrichtung einen Kontakt beurteilt, während das Vordergrundelement und das Hintergrundelement auf derselben Richtungslinie von dem Betrachtungspunkt aus liegen,

und die Synthetisierungseinrichtung ein Gesamtbild synthetisiert, während zwei Pixel (A), (B), die ausgewählt werden sollen, solche Pixel sind, dass ein Bestandteilelement des Hintergrunds entsprechend zu Pixel (A) des Hintergrundbilds und ein Bestandteilelement des geänderten Vordergrundobjekts entsprechend zu Pixel (B) des geänderten Vordergrundbilds auf derselben Richtungslinie von dem Betrachtungspunkt aus liegen.

7. Bildsynthetisierungsvorrichtung nach Anspruch 6, wobei
die Regel so ist, dass die Änderung basierend auf der Eigenschaft des Hintergruns und der Eigenschaft des Vordergrundobjekts bestimmt wird.

8. Bildsynthetisierungsvorrichtung nach Anspruch 1, wobei
die Hintergrundtiefeninformationen Informationen über einen diskontinuierlichen Punkt des Hintergrunds umfassen.

9. Bildsynthetisierungsvorrichtung nach Anspruch 1, die weiterhin

eine Weitwinkelhintergrundbild-Speichereinrichtung zum Speichern eines Weitwinkelhintergrundbilds und
eine Hintergrundbild-Ausschneideinrichtung zum Ausschneiden eines schmalen Hintergrundbilds, das innerhalb eines bestimmten Betrachtungsfelds liegt, das durch eine eingegebene Betrachtungspunktinformation bestimmt ist, von dem Weitwinkelhintergrundbild, aufweist, wobei
die Hintergrundbildspeichereinrichtung das ausgeschnittene, schmale Hintergrundbild speichert.

10. Verfahren zum Synthetisieren eines Bilds, das die Schritte aufweist:

(a) Speichern eines Hintergrundbilds, erhalten durch Betrachten eines Hintergrunds von einem vorbestimmten Betrachtungspunkt aus innerhalb eines dreidimensionalen Raums,
(b) Speichern von Tiefeninformationen über jedes jeweilige Pixel des Hintergrundbilds, wobei die Tiefeninformationen einen Abstand zwischen dem Betrachtungspunkt und einem Element des Hintergrunds umfassen, wobei jedes jeweilige Element jedem jeweiligen Pixel entspricht,
(c) Eingeben von Objektinformationen von mindestens einer Position und Konfiguration eines Vordergrundobjekts, plaziert in dem dreidimensionalen Raum, um dadurch ein Vordergrundbild durch Betrachten des Vordergrundobjekts von dem Betrachtungspunkt aus zu erhalten,
(d) Berechnen einer Vordergrundobjekttiefe, umfassend Abstände zwischen dem Betrachtungspunkt und jedem jeweiligen Element des Vordergrundobjekts innerhalb des dreidimensionalen Raums, unter Verwendung der Objektinformationen,
(e) Synthetisieren eines gesamten Bilds durch Auswählen entweder eines Pixels (A) des Hintergrundbilds oder eines Pixels (B) des Vordergrundobjektbilds basierend auf den Hintergrundtiefeninformationen und den Vordergrundtiefeninformationen, wenn die zwei Pixel (A), (B), die ausgewählt werden sollen, in einer Richtungslinie von dem Betrachtungspunkt aus liegen, und

wobei der Schritt eines Synthetisierens ein Auswählen eines Pixels umfasst, das einen kleineren Tiefenwert besitzt.

11. Verfahren zum Synthetisieren eines Bilds nach Anspruch 10, das weiterhin die Schritte aufweist:

(e) Beurteilen eines Kontakts eines Elements (C) in dem Vordergrundobjekt mit einem Element (D) in dem Hintergrund, auf der Basis der Hintergrundtiefe und der Vordergrundtiefe, wenn das Element (C) und das Element (D) in einer Richtungslinie von dem Betrachtungspunkt aus liegen, und
(f) Ändern der Konfiguration oder der Position des Vordergrundobjekts basierend auf einer vorbestimmten Regel nach Beurteilung, dass ein Kontakt aufgetreten ist.

12. Verfahren nach Anspruch 11, wobei
die vorbestimmte Regel auf einer Eigenschaft des Hintergrunds und einer Eigenschaft des Vordergrundobjekts basiert.

13. Verfahren nach Anspruch 12, wobei

die Vordergrundobjektinformationen eine Geschwindigkeit des Vordergrundobjekts umfassen,
die Eigenschaft des Hintergrunds entweder einen Rückstoßkoeffizienten, eine Temperatur oder eine Härte umfasst, und
die Eigenschaft des Vordergrundobjekts entweder einen Rückstoßkoeffizienten, eine Elastizität oder eine Temperatur umfasst.

14. Verfahren nach Anspruch 13, wobei
die Eigenschaft einer Temperatur des Vordergrundobjekts eine die Konfiguration ändernde Charakteristik, wie beispielsweise eine Explosion oder Fusion ist, und auf einer Temperatur des Hintergrunds basiert.

15. Verfahren nach Anspruch 14, wobei

die Elastizitätseigenschaft des Vordergrundobjekts eine die Konfiguration ändernde Charakteristik ist, wie beispielsweise Deformation oder Zerlegung entsprechend der Härte des Hintergrunds.

16. Verfahren nach Anspruch 14, wobei

wenn eine Neigung jedes Elements des Hintergrunds mit Normalen-Vektoren (Nx, Ny, Nz) dargestellt ist, ein Rückstoßkoeffizient des Hintergrunds mit ν1, dargestellt ist, eine Bewegungsgeschwindigkeit des Vordergrundobjekts mit V1 dargestellt ist, eine Bewegungsrichtung des Vordergrundobjekts mit (Lx, Ly, Lz) dargestellt ist, eine neue Bewegungsgeschwindigkeit des Vordergrundobjekts nach dem Kontakt mit V2 dargestellt ist, und eine neue Bewegungsrichtung des Vordergrundobjekts nach dem Kontakt mit (Mx, My, Mz) dargestellt ist, die neue Bewegungsgeschwindigkeit V2 und die neue Bewegungsrichtung (Mx, My, Mz) auf der Basis der Neigung (Nx, Ny, Nz), des Rückstoßkoeffizienten ν1, der Bewegungsgeschwindigkeit V1 und der Bewegungsrichtung (Lx, Ly, Lz) berechnet werden, und eine neue Position des Vordergrundobjekts auf der Basis der neuen Bewegungsgeschwindigkeit V2 und der neuen Bewegungsrichtung (Mx, My, Mz) erhalten wird.

17. Verfahren nach Anspruch 10, wobei die Hintergrundtiefeninformationen Informationen über einen diskontinuierlichen Punkt des Hintergrunds umfassen.

18. Verfahren nach Anspruch 10, das die folgenden Schritte umfasst:

(f) Speichern eines Weitwinkelhintergrundbilds,
(g) Ausschneiden eines schmalen Hintergrundbilds von dem Weitwinkelhintergrundbild, und
(h) Speichern des ausgeschnittenen, schmalen Hintergrundbilds als das Hintergrundbild in dem Schritt (a).

**Revendications**

1. Dispositif de synthèse d'image comprenant :

un moyen de mémorisation d'image d'arrière-plan (101) destiné à mémoriser une image d'arrière-plan qui est obtenue en observant un certain arrière-plan depuis un point de vue prédéterminé (202) à l'intérieur d'un espace en 3 dimensions,
un moyen de mémorisation de profondeur d'arrière-plan (103) destiné à mémoriser des informations d'arrière-plan concernant chaque pixel respectif de ladite image d'arrière-plan, tandis que lesdites informations d'arrière-plan représentent une distance entre le point de vue et un élément de constitution dudit certain arrière-plan, chaque élément respectif correspondant audit chaque pixel respectif,
un moyen d'entrée d'informations d'un objet d'avant-plan (104) destiné à entrer des informations d'un objet concernant au moins une position et une configuration d'un objet d'avant-plan placé dans ledit espace à 3 dimensions, de manière à obtenir ainsi une image d'avant-plan en observant l'objet d'avant-plan depuis le point de vue (202),
un moyen de calcul de profondeur d'un objet d'avant-plan destiné à calculer des informations de profondeur d'un objet d'avant-plan qui représentent les distances entre lesdits point de vue et chaque élément de constitution respectif dudit objet d'avant-plan à l'intérieur dudit espace en 3 dimensions, en utilisant lesdites informations d'objet,
un moyen de synthèse (105) destiné à synthétiser une image complète en sélectionnant soit un pixel (A) de l'image d'arrière-plan, soit un pixel (B) de l'image de l'objet d'avant-plan sur la base des informations de profondeur d'arrière-plan et des informations de profondeur d'avant-plan, alors que les deux pixels (A), (B) à sélectionner sont des pixels tels qu'un élément de constitution de l'arrière-plan correspondant au pixel (A) de l'image d'arrière-plan et qu'un élément de constitution de l'objet d'avant-plan correspondant au pixel (B) de l'image d'avant-plan sont dans une même direction depuis ledit point de vue, et
le moyen de synthèse sélectionne un pixel qui possède une valeur inférieure desdites informations de profondeur.

2. Dispositif de synthèse d'image selon la revendication 1 comprenant en outre :

un moyen d'estimation (502) destiné à déterminer si un contact a eu lieu entre l'élément d'avant-plan et l'élément d'arrière-plan,
un moyen de changement destiné à changer les informations d'avant-plan lorsque le moyen d'estimation détermine qu'un contact a eu lieu, et
dans lequel ledit moyen d'estimation destiné à déterminer si un contact a eu lieu est fondé sur une propriété de l'élément d'arrière-plan et une propriété de l'élément d'avant-plan, et
dans lequel lesdites informations concernant l'objet d'avant-plan comprennent la vitesse de l'objet d'avant-plan, et la propriété de l'élément d'avant-plan comprend un coefficient de répulsion, une température et une élasticité de l'objet d'avant-plan, et

la propriété de l'élément d'arrière-plan comprend un coefficient de répulsion, une température et une dureté de l'élément d'arrière-plan.

**3.** Dispositif de synthèse d'image selon la revendication 2, dans lequel ledit moyen de changement comprend des caractéristiques de changement de configuration d'explosion et de fusion, fondées sur la température de l'objet d'avant-plan et la température de l'objet d'arrière-plan.

**4.** Dispositif de synthèse d'image selon la revendication 2, dans lequel ledit moyen de changement comprend des caractéristiques de changement de configuration de déformation et de dispersion, fondées sur la dureté de l'élément d'arrière-plan et l'élasticité de l'élément d'avant-plan.

**5.** Dispositif de synthèse d'image selon la revendication 2, dans lequel

(a) une inclinaison de chaque élément d'arrière-plan est représentée par des vecteurs normaux (Nx, Ny, Nz), le coefficient de répulsion de chaque élément d'arrière-plan est représenté par v1, la vitesse de déplacement de l'objet d'avant-plan est représentée par V1, le sens de déplacement de l'objet d'avant-plan est représenté par (Lx, Ly, Lz), la nouvelle vitesse de déplacement de l'objet d'avant-plan après le contact est représentée par V2, et le nouveau sens de déplacement de l'objet d'avant-plan après le contact est représenté par (Mx, My, Mz), et

(b) la nouvelle vitesse de déplacement V2, et le nouveau sens de déplacement (Mx, My, Mz) sont calculés sur la base de l'inclinaison des vecteurs (Nx, Ny, Nz), du coefficient de répulsion v1, de la vitesse de déplacement V1, et du sens de déplacement (Lx, Ly, Lz), et

(c) une nouvelle position de l'objet d'avant-plan est obtenue sur la base de la nouvelle vitesse V2, et du nouveau sens de déplacement (Mx, My, Mz).

**6.** Dispositif de synthèse d'image selon la revendication 2 dans lequel

ledit moyen d'estimation estime un contact, alors que l'élément d'avant-plan et l'élément d'arrière-plan sont sur une même droite de direction depuis ledit point de vue, et ledit moyen de synthèse synthétise une image complète, tandis que deux pixels (A), (B) à sélectionner sont des pixels tels qu'un élément de constitution de l'arrière-plan correspondant au pixel (A) de l'image d'arrière-plan et qu'un élément de constitution de l'objet d'avant-plan modifié correspondant au pixel (B) de l'image d'avant-plan modifié sont sur une même droite de direction depuis ledit point de vue.

**7.** Dispositif de synthèse d'image selon la revendication 6, dans lequel

la règle est telle qu'un changement est déterminé d'après la propriété de l'arrière-plan et la propriété de l'objet d'avant-plan.

**8.** Dispositif de synthèse d'image selon la revendication 1, dans lequel

les informations de profondeur d'arrière-plan comprennent des informations concernant un point discontinu de l'arrière-plan.

**9.** Dispositif de synthèse d'image selon la revendication 1, comprenant en outre

un moyen de mémorisation d'image d'arrière-plan large destiné à mémoriser une image d'arrière-plan large, et
un moyen de découpage d'image d'arrière-plan destiné à découper une image d'arrière-plan étroite qui est à l'intérieur d'un certain champ de vision, qui est déterminé par des informations d'un point de vue fournies en entrée, à partir d'une image d'arrière-plan large,
dans lequel ledit moyen de mémorisation d'image d'arrière-plan mémorise l'image d'arrière-plan étroite découpée.

**10.** Procédé destiné à synthétiser une image comprenant les étapes consistant à :

(a) mémoriser une image d'arrière-plan obtenue en visualisant un arrière-plan depuis un point de vue prédéterminé à l'intérieur d'un espace en 3 dimensions,
(b) mémoriser des informations de profondeur concernant chaque pixel respectif de l'image d'arrière plan, dans lequel les informations de profondeur comprennent une distance entre le point de vue et un élément de l'arrière plan, chaque élément respectif correspondant à chaque pixel respectif,
(c) entrer des informations d'un objet concernant au moins une position et une configuration d'un objet d'avant-plan placé dans l'espace à 3 dimensions, de manière à obtenir ainsi une image d'avant-plan en visualisant l'objet d'avant-plan depuis le point de vue,
(d) calculer une profondeur d'objet d'avant-plan comprenant des distances entre le point de vue et chaque élément respectif de l'objet d'avant-plan à l'intérieur de l'espace en 3 dimensions, en utilisant les informations de l'objet,
(e) synthétiser une image en entier en sélectionnant soit un pixel (A) de l'image d'arrière-plan, soit un pixel (B) de l'image de l'objet d'avant-plan sur la base des informations de profondeur d'arrière-plan et des informations de profondeur d'avant-plan, lorsque les deux pixels (A), (B) à sélectionner sont sur une droite de direction depuis le point de vue, et
dans lequel l'étape de synthèse comprend la sélection d'un pixel qui possède une valeur de profondeur inférieure.

11. Procédé destiné à synthétiser une image selon la revendication 10 comprenant en outre les étapes consistant à :

(e) estimer un contact d'un élément (C) dans l'objet d'avant-plan avec un élément (D) dans l'arrière-plan, sur la base de la profondeur d'arrière-plan et de la profondeur d'avant-plan lorsque l'élément (C) et l'élément (D) sont sur une droite de direction depuis le point de vue, et
(f) changer la configuration ou la position de l'objet d'avant-plan sur la base d'une règle prédéterminée après avoir estimé qu'un contact a eu lieu.

12. Procédé selon la revendication 11, dans lequel
la règle prédéterminée est fondée sur une propriété de l'arrière-plan et une propriété de l'objet d'avant-plan.

13. Procédé selon la revendication 12, dans lequel

les informations d'objet d'avant-plan comprennent la vitesse de l'objet d'avant-plan,
la propriété de l'arrière-plan comprend un élément parmi le coefficient de répulsion, la température et la dureté, et
la propriété de l'objet d'avant-plan comprend un élément parmi le coefficient de répulsion, l'élasticité et la température.

14. Procédé selon la revendication 13, dans lequel
la propriété de température de l'objet d'avant-plan est une caractéristique de changement de configuration telle qu'une explosion ou une fusion et est fondée sur la température de l'arrière-plan.

15. Procédé selon la revendication 14, dans lequel
la propriété d'élasticité de l'objet d'avant-plan est une caractéristique de changement de configuration, telle qu'une déformation ou un désassemblage correspondant à la dureté de l'arrière-plan.

16. Procédé selon la revendication 14, dans lequel

lorsque l'inclinaison de chaque élément de l'arrière-plan est représentée par des vecteurs normaux (Nx, Ny, Nz), un coefficient de répulsion de l'arrière-plan est représenté par v1, une vitesse de déplacement de l'objet d'avant-plan est représentée par V1, une vitesse de déplacement de l'objet d'avant-plan est représentée par V1, une direction de déplacement de l'objet d'avant-plan est représentée par (Lx, Ly, Lz), une nouvelle vitesse de déplacement de l'objet d'avant-plan après le contact est représentée par V2, et une nouvelle direction de déplacement de l'objet d'avant-plan après le contact est représentée par (Mx, My, Mz),
la nouvelle vitesse de déplacement V2 et la nouvelle direction de déplacement (Mx, My, Mz) sont calculées sur la base de l'inclinaison (Nx, Ny, Mz), du coefficient de répulsion v1, de la vitesse de déplacement V1, et de la direction de déplacement (Lx, Ly, Lz), et
une nouvelle position de l'objet d'avant-plan est obtenue sur la base de la nouvelle vitesse de déplacement V2, et de la nouvelle direction de déplacement (Mx, My, Mz).

17. Procédé selon la revendication 10, dans lequel
les informations de profondeur d'arrière-plan comprennent des informations concernant un point discontinu de l'arrière-plan.

18. Procédé selon la revendication 10, comprenant les étapes suivantes

(f) mémoriser une image d'arrière-plan large,
(g) découper une image d'arrière-plan étroite à partir de l'image d'arrière-plan large, et
(h) mémoriser l'image d'arrière-plan étroite découpée en tant qu'image d'arrière-plan dans l'étape (a).

Fig. 1

# Fig. 2

(a)

201 202 203

$\theta_s$
$\theta_e$
$\theta_o$

205

204

(c)

$\frac{Vh}{2}$ V

v1

$\frac{Uw}{2}$ O u1 $\frac{Uw}{2}$

$\frac{Vh}{2}$ U

(b)

h

206 207

208

O $\theta$

$\theta_s$ $\theta_e$

(d)

r

O $\theta$

$\theta_s$ $\theta_e$

17

Fig. 3

(a)

(b)

## Fig. 4

```
┌─────────────────────────────┐
│ Output picture initialization│ — 1
│    by background picture     │
└─────────────────────────────┘
              │
┌─────────────────────────────┐
│   Initialization of Z-buffer │ — 2
│      by background depth     │
└─────────────────────────────┘
              │
┌───────────────────────────────────┐
│ See-through, projection, transformation│ — 3
│      of peaks of object polygon   │
└───────────────────────────────────┘
              │
┌─────────────────────────────┐
│   Processing of each polygon │ — 4
└─────────────────────────────┘
              │
┌─────────────────────────────┐
│      Scan line division      │ — 5
└─────────────────────────────┘
              │
┌─────────────────────────────┐
│  Calculation of depth value r│ — 6
│     of point on scan line    │
└─────────────────────────────┘
              │
        Is r smaller                 — 7
   than the corresponding value        NO
        of Z-buffer?
              │ YES
┌─────────────────────────────┐
│   Write color from polygon   │ — 8
│   attribute in output picture│
└─────────────────────────────┘
              │
┌─────────────────────────────┐
│      Write r into Z-buffer   │ — 9
└─────────────────────────────┘
              │
   Terminal end of scan line?   — 10
    NO        │ YES
   Is processing of all lines over?   — 11
    NO        │ YES
   Is processing of all polygons over?  — 12
    NO        │ YES
```

# Fig. 5

Background picture store **101** → Background picture cut-out unit **102** → Background picture → Background and foreground synthesizing unit **502** → Output picture

Background depth store **103** → Depth information → Background and foreground synthesizing unit

Foreground object information ← Moving foreground object generating unit **501**

Move limit information

Viewing point information

Move control information →

EP 0 668 571 B1

# Fig. 6

Flowchart:

- Is r smaller than corresponding value of Z-buffer?
- 13 — Notice contact to move limit information
- Terminal end of scan line?
- Is processing of all scan lines over?
- Is processing of all polygons over?

# Fig. 7

Background picture store (101) → Background picture cut-out unit (102) → Background picture → Background object synthesizing unit (703) → Output picture

Background depth store (103) → Depth information → Background object synthesizing unit

Background characteristic information store (701) → Background characteristic information → Background object synthesizing unit

Viewing point information, Move control information, Object information, Object change information → Object generating unit (702)

EP 0 668 571 B1

# Fig. 8

EP 0 668 571 B1

# Fig. 9

(a)

(b)

EP 0 668 571 B1

Fig. 10

1 Checking of edge data

2 Edge information flag=0

Contact judging by Z-buffer

3 Edge information flag=1

Synthesizing by hidden surface processing by Z-buffer

4 Edge information flag=2

Determination of reflection direction supposing a plane exists in the depth direction

Fig. 11

# Fig. 12

(a)

(b)

(c)